# EUROPÄISCHE PATENTSCHRIFT

(11) **EP 0 663 339 B1**
(45) Veröffentlichungstag und Bekanntmachung des Hinweises auf die Patenterteilung: **26.11.1997**
(21) Anmeldenummer: 95100420.9
(22) Anmeldetag: 13.01.1995
(51) Int. Cl.: B65B 35/58, B65B 61/18, B65G 47/244, B65C 9/06

(54) **Verpackungsmaschine zum Aufbringen von Tapes oder Etiketten auf quaderförmige Packungen**
Packaging machine for applying tapes or labels on parallelepiped packages
Machine d'emballage pour appliquer des bandes adhésives ou des étiquettes sur des emballages parallélépipèdiques

(30) Priorität: 15.01.1994 DE 4401054
(43) Veröffentlichungstag der Anmeldung: 19.07.1995
(73) Patentinhaber: Christian Senning Verpackungsautomaten GmbH & Co., D-28239 Bremen (DE)
(72) Erfinder: Wach, Jürgen, D-28719 Bremen (DE)
(74) Vertreter: Eisenführ, Speiser & Partner

(56) Entgegenhaltungen:
- EP-A- 0 396 979
- EP-A- 0 399 264
- DE-A- 3 915 192
- GB-A- 2 262 726
- US-A- 4 085 839
- US-A- 4 967 899

## Beschreibung

Die Erfindung betrifft eine Verpackungsmaschine mit einem Applikator zum Aufbringen von Tapes (Klebestreifenabschnitten) oder Etiketten auf quaderförmige Packungen, die auf einer ersten Fördereinrichtung in Querausrichtung zugeführt werden, ggf. in einer Drehvorrichtung in der waagerechten Ebene gedreht und nach Aufbringen der Tapes oder Etiketten die Maschine auf einer zweiten Fördereinrichtung in Längsausrichtung wieder verlassen, wobei der Applikator seitlich der Fördereinrichtungen angeordnet ist.

In Verpackungsmaschinen für quaderförmige Packungen, die z.B. Papiertaschentücher enthalten, kommen diese Packungen mit hoher Geschwindigkeit auf einer Fördereinrichtung in Querausrichtung an und sollen in einem Applikator, der seitlich der Fördereinrichtungen angeordnet ist, mit Tapes (Klebestreifenabschnitten) oder Etiketten versehen werden, bevor sie über eine weitere Fördereinrichtung zur Weiterverpackung in Gebinden weitergeleitet werden. Solche Applikatoren dienen zum Aufbringen von sogenannten Tapes oder Etiketten, mit denen eine Aufreißöffnung der Packung verschlossen ist, um z.B. Taschentücher zu entnehmen und die Packung anschließend wieder verschließen zu können. Der Unterschied zwischen sogenannten Tapes und Etiketten besteht darin, daß Tapes von einem laufenden Band abgeschnitten werden, während Etiketten als Ausschnitte auf einem Trägerband aufgeklebt sind und von diesem abgenommen werden.

Es sind nun zwei verschiedene Arten von Packungen bekannt, die durch Tapes oder Etiketten wiederverschließbar sind. Bei der einen Art von Packungen sind die Tapes oder Etiketten an der Schmalseite angeordnet, während bei der anderen Art die Tapes oder Etiketten an der Breitseite der Packung angebracht sind. Da der Applikator zweckmäßigerweise an der Seite der Fördereinrichtungen angeordnet ist, muß die durchlaufende Packung je nach der Bauart der Verpackungsmaschine entweder in Querausrichtung oder Längsausrichtung an dem Applikator vorbeilaufen. Man hat zum Aufbringen der Tapes oder Etiketten deshalb bisher zwei unterschiedliche Bauarten von Verpackungsmaschinen hergestellt, die dann nur für den jeweils vorgesehenen Zweck zu gebrauchen waren. Bei einer ersten Art von Verpackungsmaschinen liefen die z.B. in Querausrichtung ankommenden Packungen direkt an dem Applikator vorbei und wurden an ihrer Schmalseite mit entsprechenden Tapes oder Etiketten versehen. Die weitere Behandlung der Packungen, z.B. das Erstellen von Gebinden erfolgte dann in der gleichen Förderrichtung. Bei einer zweiten Bauart wurden die Packungen in einer Querabschubvorrichtung in eine um 90° gegenüber der ankommenden Richtung verdrehte Transportrichtung umgelenkt und von dort dann in Längsausrichtung seitlich an dem Applikator vorbeitransportiert und an ihrer Breitseite mit Tapes oder Etiketten versehen. Es handelt sich bei den beiden Bauarten also um unterschiedliche Maschinenkonfigurationen, die jeweils unterschiedliche Aufstellungen erforderten.

Aus der DE-A-39 15 192 ist bereits eine Vorrichtung zum Aufbringen von Klebestreifen oder Etiketten auf Verpackungen von z.B. Papiertaschentüchern bekannt, mit denen eine Aufreißöffnung abgedeckt und nach dem Aufreißen wieder verschlossen werden kann. Die Vorrichtung arbeitet mit zwei parallel durchlaufenden Strängen von Verpackungen, die in Querausrichtung ankommen. Die Vorrichtung ist zum Aufbringen von Doppel-Klebestreifen bzw. Doppel-Etiketten auf quer nebeneinanderliegende Packungen der beiden Packungsstränge ausgebildet, und diese Doppel-Klebebänder bzw. Doppel-Etiketten werden anschließend durchtrennt, wobei die frei stehenden Enden anschließend auf die Stirnfläche umgelegt werden. In einer ersten Ausführungsform der Vorrichtung werden die Klebebänder bzw. Etiketten an den Schmalseiten der Packungen angebracht, und damit die Packungen der nebeneinander durchlaufenden Packungsstränge spiegelsymmetrisch zueinander verlaufen, werden die einzelnen Packungen des einen Packungsstranges durch eine mit einer Saugvorrichtung arbeitenden Drehvorrichtung um 180° in der waagerechten Ebene gedreht, bevor das Aufbringen der Klebestreifen bzw. Etiketten erfolgt. In einer anderen Ausführungsform werden die Klebebänder bzw. Etiketten auf der Breitseite der Packungen angebracht. Da die Packungen in zwei Packungssträngen in Querausrichtung ankommen, müssen die Packungen beider Packungsstränge durch entsprechende Drehvorrichtungen um jeweils 90° gedreht werden, bevor die Doppel-Klebestreifen o. dgl. aufgeklebt werden. Somit sind für diese beiden Betriebsarten zwei verschiedene Maschinenanordnungen erforderlich, von denen jede nur für den vorgesehenen Zweck zu gebrauchen ist.

Der vorliegenden Erfindung liegt die Aufgabe zugrunde, eine Verpackungsmaschine mit einem Applikator zu schaffen, mit dem wahlweise das Aufbringen von Tapes oder Etiketten entweder auf die Schmalseite oder auf die Breitseite der Packungen möglich ist, also die Maschine nicht auf die eine oder andere Art von Packungen beim Aufbringen von Tapes beschränkt ist.

Diese Aufgabe wird gemäß der vorliegenden Erfindung dadurch gelöst, daß vor und hinter dem Applikator je eine Drehvorrichtung vorgesehen ist, von denen wahlweise die eine oder die andere in Wirkstellung bringbar ist, und mit der die durchlaufenden Packungen aus der Querausrichtung entweder vor oder hinter dem Applikator um 90° in der waagerechten Ebene in die Längsausrichtung gedreht werden, um die Tapes oder Etiketten wahlweise auf die Schmalseite oder auf die Breitseite der Packungen aufzubringen.

Das Aktivieren der einen oder anderen Drehvorrichtung kann vorzugsweise dadurch erfolgen, daß entsprechende Wirkelemente der Drehvorrichtungen umgerüstet werden. Ein solches Umrüsten kann in verhältnismäßig kurzer Zeit (z.B. in einer Stunde) erfolgen, wenn die Verpackungsmaschine von einer Art von Packungen auf die andere Art umgestellt werden soll. Denkbar ist jedoch auch eine entsprechende Umschaltvorrichtung für die Wirkelemente der Drehvorrichtungen, wodurch die Umschaltzeit weiter verkürzbar ist.

Es sind bereits Dreh- oder Wendevorrichtungen für Weichpackungen verschiedener Art, z.B. für Zigarettenpackungen, bekannt, mit denen die Richtung eines Packungsstranges verändert werden kann. Bei einer einfachen Vorrichtung zur Richtungsänderung um 90° in einer Verpackungslinie werden ein oder mehrere Packungsstränge z.B. in Querrichtung angeliefert und durch eine Abschubvorrichtung um 90° hierzu abgeschoben. Aus DE-A 25 10 094 und DE-A 42 14 321 sind weitere Vorrichtungen zum Verändern der Lage von Zigarettenpackungen bekannt, die mit verhältnismäßig komplizierten Mechanismen ausgestattet sind.

Die Erfindung wird nachfolgend anhand eines Ausführungsbeispiels unter Bezug auf die beigefügten Zeichnungen näher erläutert.

Es zeigen:
- Fig. 1: eine Seitenansicht einer Verpackungsmaschine; und
- Fig. 2a + 2b: schematische Darstellungen des Packungsdurchlaufs in den beiden verschiedenen Stellungen der Verpackungsmaschine.

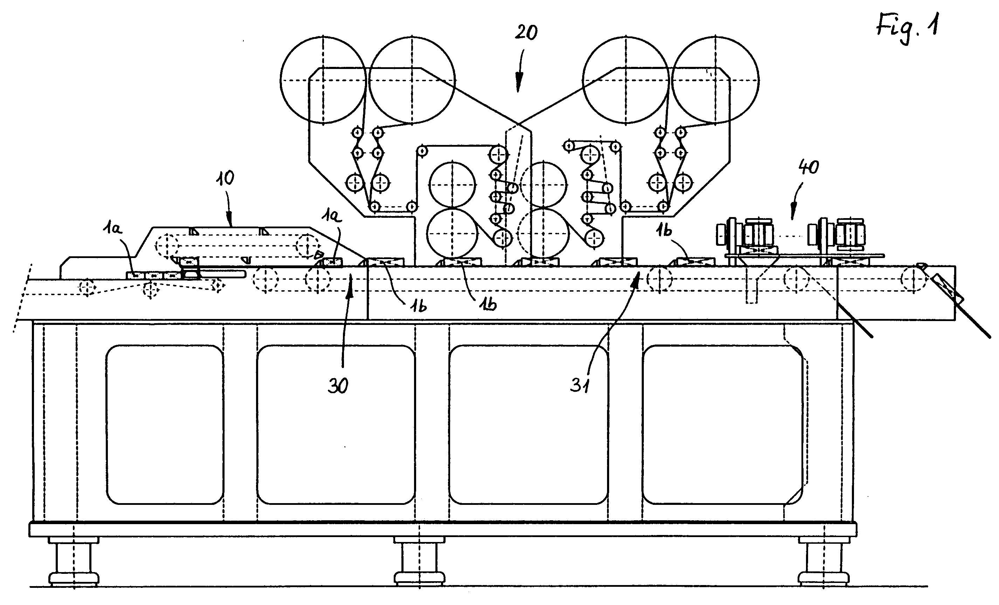

Die in Fig. 1 in Seitenansicht dargestellte Verpackungsmaschine weist im (in der Zeichnung) linken Bereich eine Vereinzelungsvorrichtung 10 auf, die dazu dient, auf einem Förderband ankommende Packungen 1a zu vereinzeln, d.h, Zwischenräume zwischen aufeinander folgenden Packungen zu bilden. Die Vereinzelungsvorrichtung 10 wird nachfolgend für die Erläuterung der Erfindung jedoch als erste Fördereinrichtung 10 bezeichnet.

Die in Querausrichtung ankommenden Packungen 1a werden durch eine Dreheinrichtung 30 um 90° in der waagerechten Ebene gedreht und nun als Packungen 1b in Längsausrichtung weitertransportiert. Die Packungen 1b laufen an einem seitlich angeordneten Applikator 20 zum Aufbringen von Tapes (Klebestreifen) oder Etiketten vorbei und gelangen über eine weitere Dreheinrichtung 31, die jedoch nicht in Betrieb ist, an eine Querabschub-Vorrichtung 40, die dazu dient, die in Längsausrichtung ankommenden Packungen 1b anzuheben und in Querrichtung weiterzubefördern. Die Querabschub-Vorrichtung 40 hat gleichzeitig die Aufgabe, Ausschuß auszusondern und in Längsrichtung über eine Rutsche gesondert abzufördern. Diese Querabschub-Vorrichtung wird jedoch zum Zwecke der Erläuterung der Erfindung nachfolgend als zweite Fördereinrichtung 40 bezeichnet.

Nur der Vollständigkeit halber wird noch erwähnt, daß die in Fig. 1 dargestellte Verpackungsmaschine für die Behandlung von zwei nebeneinander liegenden Bahnen von Packungen eingerichtet ist, die über zwei nebeneinander liegende Vereinzelungsvorrichtungen 10 vereinzelt werden, durch zwei nebeneinanderliegende Applikatoren 20 mit Tapes oder Etiketten versehen werden und schließlich durch zwei versetzt nebeneinander angeordnete Querabschub-Vorrichtungen 40 in Querrichtung weitertransportiert werden. Darüber hinaus sind jeweils zwei nebeneinanderliegende Drehvorrichtungen 30 bzw. 31 vorgesehen. Die Erfindung wird nachfolgend jedoch nur für eine Bahn von Packungen beschrieben.

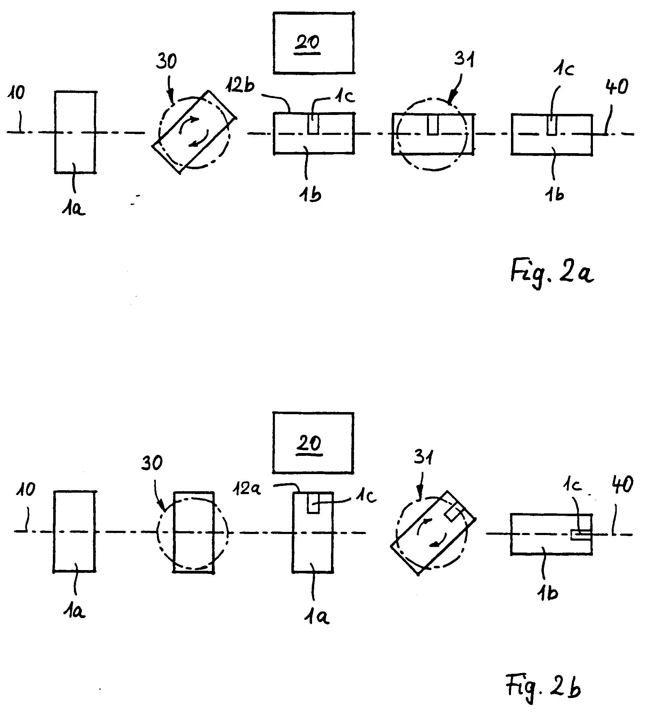

In den Fig. 2a und 2b ist nun schematisch dargestellt, wie die in Querausrichtung auf der ersten Fördereinrichtung 10 ankommenden Packungen 1a entweder durch die Drehvorrichtung 30 vor dem Applikator 20 um 90° gedreht werden (Fig. 2a), oder den Applikator 20 in Querausrichtung durchlaufen und erst danach durch die Drehvorrichtung 31 in Längsausrichtung gedreht werden (Fig. 2b).

Bei der Anordnung nach Fig. 2a ist also die Drehvorrichtung 30 aktiviert und dreht die in Querausrichtung ankommende Packung 1a in Längsausrichtung 1b. Der Applikator 20 kann also von der Seite her an der Breitseite 12b ein Tape 1c anbringen. Anschließend läuft die Packung 1b in Längsausrichtung über die deaktivierte Drehvorrichtung 31 auf der zweiten Fördereinrichtung 40 weiter.

In Fig. 2b läuft die auf der ersten Fördereinrichtung 10 in Querausrichtung ankommende Packung 1a über die deaktivierte Drehvorrichtung 30 bis zum Applikator 20, wo sie an der Schmalseite 12a mit einem Tape 1c versehen wird. Anschließend gelangt die immer noch in Querausrichtung befindliche Packung 1a zur aktivierten Drehvorrichtung 31, wird um 90° gedreht und gelangt in Längsausrichtung 1b auf die zweite Fördereinrichtung 40.

Auf diese Weise ist es also möglich, bei gleichbleibender Zusammenstellung von erster Fördereinrichtung 10, zweiter Fördereinrichtung 40, Applikator 20 und den beiden Drehvorrichtungen 30 und 31 zwei Funktionen wahlweise zu erfüllen, wie in den Fig. 2a und 2b dargestellt. Im ersten Fall erfolgt eine Anbringung von Tapes 1c an der Längsseite 12b der Packungen, während im zweiten Fall ein Tape 1c an der Schmalseite 12a der Packungen angebracht wird. Während im bisher beschriebenen Ausführungsbeispiel beide Drehvorrichtungen 30 und 31 vorhanden sind und jeweils wahlweise aktiviert oder deaktiviert werden, ist es natürlich auch möglich, nur eine Dreheinrichtung 30 oder 31 vor oder nach dem Applikator 20 vorzusehen und zum Umrüsten die Reihenfolge der entsprechenden Stationen zu vertauschen, ohne den Grundaufbau der ersten und zweiten Fördereinrichtungen 10, 40 zu verändern.

## Patentansprüche

1. Verpackungsmaschine mit einem Applikator (20) zum Aufbringen von Tapes (Klebestreifenabschnitten) oder Etiketten auf quaderförmige Packungen (1), die auf einer ersten Fördereinrichtung (10) in Querausrichtung (1a) zugeführt werden, ggf. in einer Drehvorrichtung in der waagerechten Ebene gedreht und nach Aufbringen der Tapes (1c) oder Etiketten die Maschine auf einer zweiten Fördereinrichtung (40) in Längsausrichtung (1b) wieder verlassen, wobei der Applikator (20) seitlich der Fördereinrichtungen angeordnet ist,
dadurch gekennzeichnet,
daß vor und hinter dem Applikator (20) je eine Drehvorrichtung (30, 31) vorgesehen ist, von denen wahlweise die eine (30) oder die andere (31) in Wirkstellung bringbar ist, und mit der die durchlaufenden Packungen (1) aus der Querausrichtung (1a) entweder vor oder hinter dem Applikator (20) um 90° in der waagerechten Ebene in die Längsausrichtung (1b) gedreht werden, um die Tapes oder Etiketten wahlweise auf die Schmalseite (12a) oder auf die Breitseite (12b) der Packungen (1) aufzubringen.

2. Verpackungsmaschine nach Anspruch 1,
dadurch gekennzeichnet, daß die Drehvorrichtungen (30, 31) durch Umrüsten von entsprechenden Wirkelementen (36, 37, 38) wahlweise in die Wirkstellung bringbar sind.

## Claims

1. Packaging machine with an applicator (20) for applying tapes (adhesive-strip portions) or labels onto packs (1) in the form of rectangular parallelepipeds which are supplied on a first conveying appliance (10) in a transverse direction (1a), if necessary are rotated in a rotating device in the horizontal plane and, after application of the tapes (1c) or labels, leave the machine again on a second conveying appliance (40) in the longitudinal direction (1b), the applicator (20) being arranged laterally with respect to the conveying appliances,
characterized in that
a rotating device (30, 31) is provided respectively in front of and behind the applicator (20), one (30) of which or the other (31) of which can be brought optionally into an active condition and with which the passing packs (1) either in front of or behind the applicator (20) can be rotated through 90° in the horizontal plane from the transverse direction (1a) into the longitudinal direction (1b), so as to apply the tapes or labels optionally on the narrow side (12a) or on the wide side (12b) of the packs (1).

2. Packaging machine according to Claim 1, characterized in that the rotating devices (30, 31) can be brought optionally into the active condition by means of retooling of corresponding active elements (36, 37, 38).

## Revendications

1. Machine d'emballage comprenant un applicateur (20) pour appliquer des bandes adhésives (portions de bandes adhésives) ou des étiquettes sur des emballages parallélépipédiques (1), qui sont amenés en position transversale (1a) sur un premier dispositif transporteur (10) et, le cas échéant, subissent une rotation dans le plan horizontal dans un dispositif tournant et qui, après application des bandes adhésives (1c) ou des étiquettes, sont évacués de la machine en position longitudinale (1b) sur un deuxième dispositif transporteur (40), l'applicateur (20) étant disposé sur les côtés des dispositifs transporteurs,
caractérisée en ce qu'il est prévu de monter en amont et en aval de l'applicateur (20) respectivement un dispositif tournant (30, 31), dont l'un (30) ou l'autre (31), peut être mis, au choix, en position active et qui permettent, soit en amont soit en aval de l'applicateur (20), de faire pivoter de 90° les emballages entraînés par le dispositif transporteur de la position transversale (1a) dans le plan horizontal vers la position longitudinale (1b), afin de pouvoir appliquer, au choix, les bandes adhésives ou les étiquettes sur le petit côté (12a) ou sur le côté large (12b) des emballages (1).

2. Machine d'emballage selon la revendication 1, caractérisée en ce que les dispositifs tournants (30, 31) peuvent être mis, au choix, en position active par le réajustement des éléments actifs correspondants (36, 37, 38).
